# EUROPEAN PATENT APPLICATION

(11) **EP 1 085 425 A2**
(43) Date of publication of application: **21.03.2001**
(21) Application number: 00120097.1
(22) Date of filing: 15.09.2000
(51) Int. Cl.: G06F 15/177, G06F 9/445, H04L 12/24

(54) **Method and apparatus for management of computer settings**

(30) Priority: 16.09.1999 JP 26257499
(71) Applicant: NEC CORPORATION, Tokyo (JP)
(72) Inventor: Hayashi, Yasuhiro, Minato-ku, Tokyo (JP); Kido, Yasuhiro, Minato-ku, Tokyo (JP)
(74) Representative: Betten & Resch

(57) **Abstract**

A computer apparatus setting information management method for maintaining setting information of a computer apparatus to be managed at an appropriate state including writing change policy data including a setting unit for each information item of the setting information and an allowable range of values corresponding to the setting unit in a storage device in advance, receiving a request for change of the setting information, reading the change policy data from the storage device based on the change request, and when a value of setting information for which the change request is made falls within the allowable range of values corresponding to the setting unit of the change requesting source, setting the requested set value to the setting information.

## Description

### BACKGROUND OF THE INVENTION

### FIELD OF THE INVENTION

The present invention relates to a computer apparatus setting information management system for determining whether change of setting information of a computer apparatus is to be allowed or not based on a predetermined policy and a management method thereof and, more particularly, to a computer apparatus setting information management system which allows a set value within a fixed range according to an information item of setting information, enables strictness of a range of set values to be changed according to a setting means, enables timing of validity check of setting information not to be limited to the time of system startup and also enables centralized control of a plurality of computer apparatuses through a network, and a management method thereof.

### DESCRIPTION OF THE RELATED ART

In recent years, computer networks in companies and the like have been gaining importance and computers connected to a network is increasing in number. As to such computer networks in an organization, some data shows that costs of computer apparatuses themselves are overwhelmed by costs of management of these apparatuses, so that techniques are demanded which enable efficient management of numerous computers connected to a network at low costs.

One of requirements for such computer management as mentioned above is maintenance of various setting information of a computer apparatus. Unless setting information of a computer connected to a network is appropriately maintained, the apparatus might not fully exhibit its performance because of degradation of security of computing resources on the network or inappropriate distribution of computing resources and network resources.

As a technique of detecting inappropriate setting information, for example, Japanese Patent Laying-Open (Kokai) No. Heisei 10-74142 discloses a method of checking validity of setting information before startup of a computer system to detect contradiction of a combination of a plurality of parameters (information items).

The invention recited in Japanese Patent Laying-Open No. Heisei 10-74142, however, has the following problems to be solved. First, checking by the device of this invention includes only the collation with a pattern of a combination of uniform set values irrespective of a setting means for setting information, which neither allows information contents that can be set according to the setting means to be varied nor allow a fixed range as set values, resulting in strict checking. In actual computer operation, required is not only simple execution of strict management but also balancing between strict management and relatively lenient management, and management tools etc. which enable such well-balanced management are demanded.

In remote management through a network, in particular, how a balance is made is important. A specific example of "setting means" here will be described in the present specification in the following.

The second problem is centralized management of setting information through a network. Although the invention of Patent Laying-Open No. Heisei 10-74142 fails to take such centralized management into consideration in particular, centralized management of numbers of computer apparatuses connected to a network through the network is of extreme use and accordingly a technique of remote management of management information itself regarding setting information from a management server, for example, is demanded.

The third problem is that, while the invention of Japanese Patent Laying-Open No. Heisei 10-74142 conducts validity check of setting information only at the startup of a computer system, inappropriate set values should be detected at the change of setting information also in other times. In a computer system, there exist, other than setting information to be referred to only at startup, setting information to be dynamically referred to as required, and for appropriately maintaining such information as the latter setting information, conducting validity check not only at the startup of the system but also at the change of the setting information is effective and techniques therefor are required.

### SUMMARY OF THE INVENTION

An object of the present invention is to provide a computer apparatus setting information management system which allows a set value within a fixed range according to an information item of setting information, enables strictness of a range of set values to be changed according to a setting means, enables timing of validity check of setting information not to be limited to the time of system startup and also enables centralized control of a plurality of computer apparatuses through a network, and a management method thereof.

According to the first aspect of the invention, a computer apparatus setting information management system for maintaining setting information of a computer apparatus to be managed at an appropriate state, comprises
storage means for in advance storing change policy data including setting means for each information item of said setting information and an allowable range of values corresponding to the setting means, and
change means for reading said change policy data from the storage means based on a request for change of said setting information and when a value of setting information for which the change request is made falls within said allowable range of values corresponding to the setting means of said change requesting source, setting said requested set value to said setting information.

In the preferred construction, said computer apparatus to be managed is connected to a management server through a communication line and said change policy data is written into said storage means based on information transferred from said management server.

In another preferred construction, the computer apparatus setting information management system further comprises determination means for determining whether a requested set value of said change request falls within said range of allowable values corresponding to the setting means of said change requesting source.

According to the second aspect of the invention, a computer apparatus setting information management method of maintaining setting information of a computer apparatus to be managed at an appropriate state, comprising the steps of
writing in advance change policy data including setting means for each information item of said setting information and an allowable range of values corresponding to the setting means into a storage device,
receiving a request for change of said setting information,
reading said change policy data from the storage device based on said change request, and
when a value of setting information for which the change request is made falls within said allowable range of values corresponding to the setting means of said change requesting source, setting said requested set value to said setting information.

In the preferred construction, said computer apparatus to be managed is connected to a management server through a communication line and said change policy data is written into said storage device based on information transferred from said management server.

In another preferred construction, the computer apparatus setting information management method further comprising the step of
determining whether a requested set value of said change request falls within said allowable range of values corresponding to the setting means of said change requesting source.

According to another aspect of the invention, a computer readable memory which records a control program for controlling change of setting information of a computer apparatus to be managed in order to maintain setting information of the computer apparatus to be managed at an appropriate state,
said control program comprising the steps of
writing in advance change policy data including setting means for each information item of said setting information and an allowable range of values corresponding to the setting means into a storage device,
receiving a request for change of said setting information,
reading said change policy data from the storage device based on said change request, and
when a value of setting information for which the change request is made falls within said allowable range of values corresponding to the setting means of said change requesting source, setting said requested set value to said setting information.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing the mechanism of setting information change management according to one embodiment of the present invention;
Fig. 2 is a flow chart showing procedures for maintaining a policy input by a manager according to the present embodiment;
Fig. 3 is a flow chart showing procedures for determining whether change of setting information is to be allowed or not according to the present embodiment;
Fig. 4 is a diagram showing a specific example of setting information change policy data according to the present embodiment.

### DESCRIPTION OF THE PREFERRED EMBODIMENT

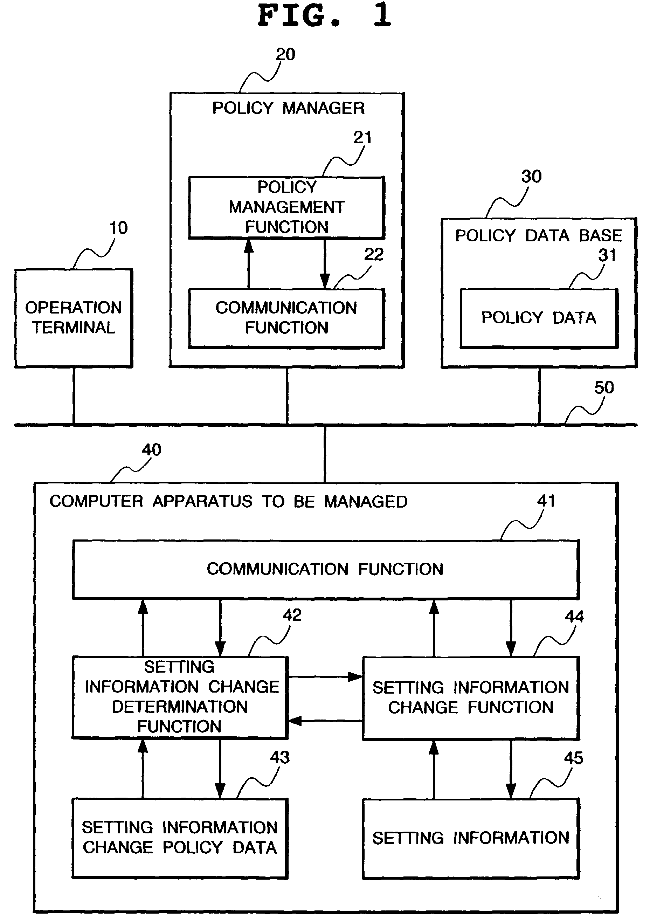

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention. Fig. 1 is a block diagram showing the mechanism of setting information change management according to the present embodiment.

In Fig. 1, the reference numeral 10 represents an operation terminal, 20 a policy manager (management server), 30 a policy data base and 40 a computer apparatus to be managed. The policy manager 20 and the computer apparatus 40 to be managed are connected to be communicable to each other through a communication line 50 such as a network.

Policy data to be applied or edited (changed policy data) through the operation terminal 10 by a manager includes setting means for setting information and an allowable range of values corresponding each setting means and is written into policy data 31 in the policy data base 30 by a policy management function 21 of the policy manager 20 and transferred to the computer apparatus 40 to be managed through a communication function 22.

In the computer apparatus 40 to be managed, 41 represents a communication function, 42 a setting information change determination function, 43 setting information change policy data, 44 a setting information change function and 45 setting information.

The setting information 45 is under the management of the setting information change function 44 and setting or change of the setting information 45 is all conducted through the setting information change function 44. The setting information change function 44, when receiving a request for setting information change by the input through the operation terminal or when receiving a request for setting information change through the network, sends the request to the setting information change determination function 42 which determines whether change is to be allowed or not with reference to the setting information change policy data 43 and returns the determination result to the setting information change function 44. The setting information change function 44 changes setting information or the like based on the return notification.

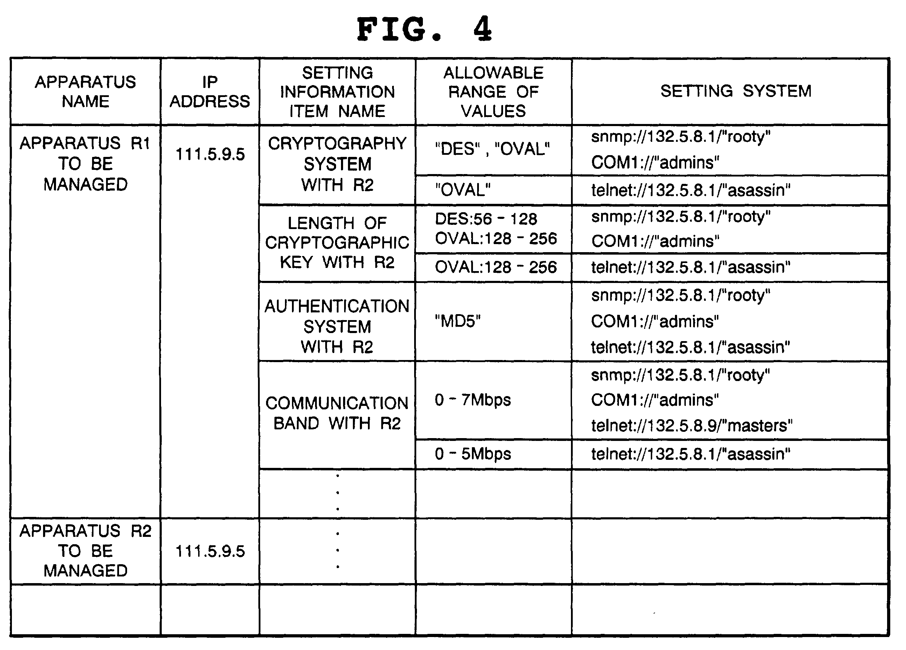

Fig. 4 is a diagram showing a practical example of policy data to be a basis for the determination whether change is allowed which is made by the setting information change determination function 42. Fig. 4 shows a setting information change policy regarding a computer apparatus to be managed named "R1". In the figure, "setting system" represents a means which is capable of information setting and is determined for each item of setting information. "Allowable range of values" represents a range of settable values which is determined for each setting information item and also for each setting system.

For example, with the information item 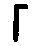 cryptography system with R2 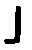 of 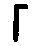 R1 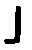 , information setting is enabled by three kinds of systems (setting means), 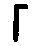 snmp://132.5.8.1/"rooty" 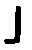 , 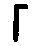 COM1: //"admins" 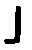 and 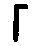 telnet://132.5.8.1/"asassin" 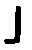 . When the setting information is to be set or changed by 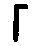 snmp://132.5.8.1/"rooty" 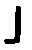 or 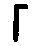 COM1://"admins" 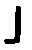 , 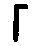 DES 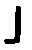 or 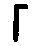 oval 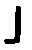 is allowed as a value, while the same is conducted by 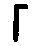 telnet://132.5.8.1/"asassin" 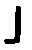 , only 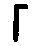 oval 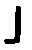 is allowed.

Similarly, as to the information items 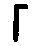 length of cryptographic key with R2 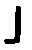 of 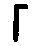 R1 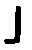 , when the setting information is to be set or changed by 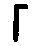 smup://132.5.8.1/"rooty" 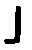 or 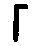 COM1://"admins" 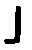 , the value 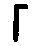 DES:56-128 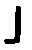 or 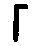 oval: 128-256 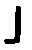 is allowed, while the same is conducted by 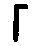 telnet://132.5.8.1/"asassin" 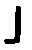 , only 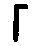 oval: 128-256 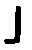 is allowed.

Also similarly, as to the information item 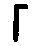 communication band with R2 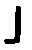 of 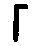 R1 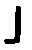 , four kinds of setting means, 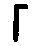 snmp://132.5.8.1/"rooty" 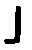 , 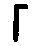 COM1://"admins" 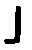 , 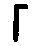 telnet://132.5.8.9/"masters" 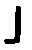 and 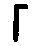 telnet://132.5.8.1/"asassin" 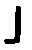 can be used. Of the four, when 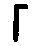 telnet://132.5.8.1/"asassin" 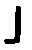 is used, allowable value should fall within a range from 0 to 5 Mbps, while when any of the remaining three kinds of setting means is used, values within a range from 0 to 7 Mbps can be set.

Thus, according to such setting information change management of the present invention as described above, it is possible not only to simply define values strictly but also to allow a fixed range of set values, as well as conducting careful management of security by a setting means, that is, according to a communication protocol and kinds of commands at the time of setting. The policy data includes those held as the setting information change policy data 43 by the computer apparatus 40 to be managed for the management of its own setting information change and those related to all the computer apparatuses and held in the policy data base 30, which data is centrally managed by the policy management function 21.

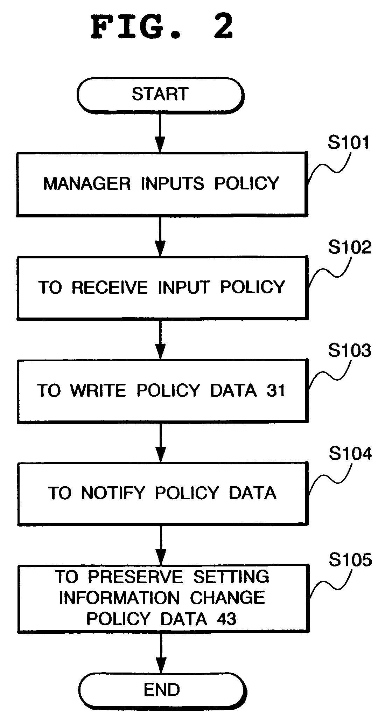

Next, description will be made of procedures of operation related to setting information change according to the present embodiment. Fig. 2 is a flow chart showing procedures for holding a policy input by the manager in a storage device etc. in advance.

First, at Step S101 of Fig.2, the manager inputs policy data through the operation terminal 10. The policy management function 21, when receiving the policy data at Step S102, writes the received data into the policy data 31 of the policy data base 30 at Step S103, and also at Step S104 notifies the same contents to the setting information change determination function 42 of the computer apparatus 40 through the communication functions 22 and 41. Upon receiving the notification, the setting information change determination function 42 conducts writing to the setting information change policy data 43 at Step S105. Thus, the policy input by the manager is held as the policy data 31 and the setting information change policy data 43.

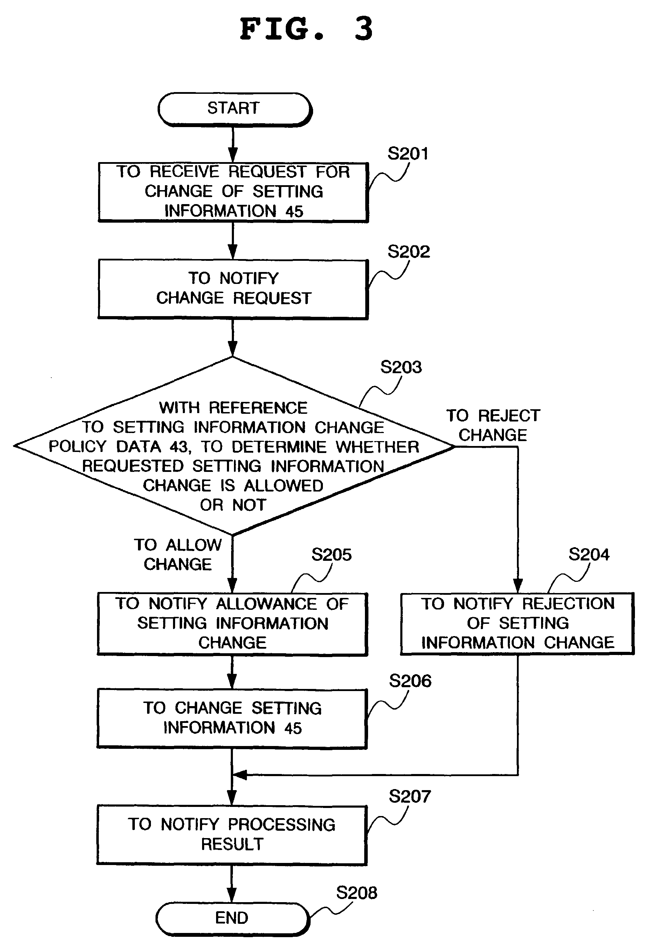

Next, Fig. 3 is a flow chart showing procedures for changing the setting information 45 based on thus set policy data. The setting information change function 44 receives a request for changing the setting information 45 through the communication function 41 at Step S201 of Fig. 3 and notifies the change request to the setting information change determination function 42 at Step S202. The notification includes an item name of information to be changed, a required set value and a setting system.

The setting information change determination function 42 having received the notification refers to the setting information change policy data 43 to determine whether change of the setting information is to be allowed or not. In a case, for example, where the information item name is 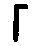 cryptography system with R2 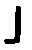 , the setting system is 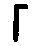 snmp://132.5.8.1/"rooty" 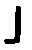 and the required set value is 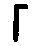 DES 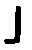 , since the setting information change policy data 43 shown in Fig. 4 allows such a change, the setting information change determination function 42 notifies the setting information change function 44 of the setting information change allowance at Step S205. Based on the change allowance, the setting information change function 44 changes the setting information 45 in accordance with the received change request at Step S206.

When, for example, the information item name is 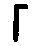 communication band with R2", the setting system is 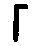 telnet://132.5.8.1/"asassin" 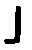 and the required set value is 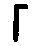 7Mbps 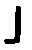 , since such required set value as this is outside the allowable range in the setting information change policy data 43 shown in Fig. 4, the setting information change determination function 42 notifies the setting information change function 44 of the rejection of the change at Step S204. When the change is thus rejected, the setting information change function 44 conducts no change of the setting information 45.

In either case where the change is allowed by the setting information change determination function 42 or where the same is rejected, the setting information change function 44 notifies a change requesting source of a processing result through the communication function 41 at Step S207 and completes the processing at S208.

The above-described setting information change function 44 and the setting information change determination function 42 are recorded on a recording medium of the computer system in the form of a program which is read by the computer for execution to conduct the above-described processing. Although the recording medium of the computer system here represents a floppy disc, an magneto-optical disc, a CD-ROM, a magnetic hard disc, a semiconductor memory, etc., it is not limited to these media. Although in the present embodiment, the setting information change function 44 and the setting information change determination function 42 operate on the computer apparatus 40 to be managed, there is no such necessity and these functions may operate, for example, on other computer apparatus on the network.

Also, although in the present embodiment, the setting information change policy data 43 and the setting information 45 are stored in the storage device provided in the computer apparatus 40 to be managed, there is no such necessity. They may be stored, for example, in a storage device of other computer apparatus etc. and read or written through the network as required.

In addition, the above-described policy manager 20 is realized as a computer system and the policy management function 21 is recorded in the recording medium of the computer system in the form of a program, which program is read and executed by the computer to execute the above-described processing.

As described in the foregoing, according to the present invention, since setting information change policy data is held and referred to for making a determination when a request for changing setting information is generated, it is possible to reject a change request not conforming with manager's intention to maintain setting information of a computer apparatus to be managed at an appropriate state.

Also according to the present invention, the above-described determination whether change is allowed or not is made within an allowable range of values corresponding to a setting system, not only strict set value management but also management of setting information having a degree of freedom within a fixed range are enabled. In addition, it is possible to change an allowable range of values corresponding to a setting system to enable careful security management.

Furthermore, according to the present invention, since every time a setting change request is generated, the above-described processing is conducted, determination of validity of setting information can be made not exclusively at, for example, the startup of a system, which enables setting information conforming with a manager's intention to be maintained with ease.

Moreover, according to the present invention, since remote management of setting information of a plurality of computer apparatuses through a network is possible, computer apparatus management efficiency is increased to reduce system operation costs.

## Claims

1. A computer apparatus setting information management system for maintaining setting information of a computer apparatus (40) to be managed at an appropriate state, comprising:
storage means (43) for in advance storing change policy data including setting means for each information item of said setting information and an allowable range of values corresponding to the setting means; and
change means (44) for reading said change policy data from the storage means (43) based on a request for change of said setting information and when a value of setting information for which the change request is made falls within said allowable range of values corresponding to the setting means of said change requesting source, setting said requested set value to said setting information.

2. The computer apparatus setting information management system as set forth in claim 1, wherein
said computer apparatus (40) to be managed is connected to a management server (20) through a communication line and said change policy data is written into said storage means (43) based on information transferred from said management server (20).

3. The computer apparatus setting information management system as set forth in claim 1, further comprising
determination means (42) for determining whether a requested set value of said change request falls within said range of allowable values corresponding to the setting means of said change requesting source.

4. A computer apparatus setting information management method of maintaining setting information of a computer apparatus to be managed at an appropriate state, comprising the steps of:
writing in advance change policy data including setting means for each information item of said setting information and an allowable range of values corresponding to the setting means into a storage device;
receiving a request for change of said setting information;
reading said change policy data from the storage device based on said change request; and
when a value of setting information for which the change request is made falls within said allowable range of values corresponding to the setting means of said change requesting source, setting said requested set value to said setting information.

5. The computer apparatus setting information management method as set forth in claim 4, wherein
said computer apparatus to be managed is connected to a management server through a communication line and said change policy data is written into said storage device based on information transferred from said management server.

6. The computer apparatus setting information management method as set forth in claim 4, further comprising the step of
determining whether a requested set value of said change request falls within said allowable range of values corresponding to the setting means of said change requesting source.

7. A computer readable memory which records a control program for controlling change of setting information of a computer apparatus to be managed in order to maintain setting information of the computer apparatus to be managed at an appropriate state,
said control program comprising the steps of:
writing in advance change policy data including setting means for each information item of said setting information and an allowable range of values corresponding to the setting means into a storage device;
receiving a request for change of said setting information;
reading said change policy data from the storage device based on said change request; and
when a value of setting information for which the change request is made falls within said allowable range of values corresponding to the setting means of said change requesting source, setting said requested set value to said setting information.

8. The computer readable memory which stores a control program as set forth in claim 7, wherein
said control program,
with said computer apparatus to be managed being connected to a management server through a communication line, writes said change policy data into said storage device based on information transferred from said management server.

9. The computer readable memory which records a control program as set forth in claim 7, wherein
said control program further comprises the step of
determining whether a requested set value of said change request falls within said allowable range of values corresponding to the setting means of said change requesting source.
